# EUROPEAN PATENT APPLICATION

(11) **EP 3 076 482 A1**
(43) Date of publication of application: **05.10.2016**
(21) Application number: 15162487.1
(22) Date of filing: 02.04.2015
(51) Int. Cl.: H01Q 13/02, H01Q 19/08, H01Q 1/32, H01Q 15/12, H01Q 15/24, H01Q 15/08, H01Q 19/06, G01S 7/03

(54) **RADAR OBSTACLE DETECTOR FOR A RAILWAY CROSSING**

(71) Applicant: Progress Rail Inspection & Information Systems S.r.l., 40134 Bologna (IT)
(72) Inventor: Albani, Matteo, 50131 Firenze (IT); Mazzinghi, Agnese, 51031 Agliana PT (IT)
(74) Representative: Modiano, Micaela Nadia

(57) **Abstract**

A radar obstacle detector for a railway crossing having a radar beam with a reduced horizontal and vertical angles is disclosed. The radar obstacle may comprise a waveguide; a transmitting element for emitting microwaves, the transmitting element being positioned in the waveguide; a horn coupled to the waveguide, the horn having a first aperture; a dielectric insert positioned in the horn; and a plurality of PCB stacks positioned at the first aperture, the PCB stacks being aligned to the plane of the first aperture, each PCB stack comprising a plurality of PCB substrates wherein each PCB substrate has a conductive strip positioned on a planar surface aligned to the plane of the first aperture.

## Description

### Technical Field

This disclosure relates to the field of scanning devices that scan objects at a railway crossing. In particular, this disclosure relates to a radar obstacle detector that emits microwave signals.

### Background

Radar obstacle detectors are generally used to detect objects within an area under surveillance. The radar obstacle detectors may be used at railway crossings to detect an intrusion onto the rail tracks after the rail crossing barriers have been closed when an approaching train is detected.

Radar obstacle detectors may rely on reflectors that reflect frequency-modulated radar signals and utilize the frequency and amplitude differences between the transmitted and reflected signals to determine the presence of an object in the surveillance area. Other radar obstacle detectors may use transmitters and receivers that are responsive to the reflections of signals from the objects and do not utilize a reflector or detect the presence of a signal from the reflector.

The radar obstacle detectors may emit microwave signals which can be emitted non-continuously or continuously. Non-continuously emitted signals are for example microwave pulses. Radar level sensors emitting continuously microwaves are known as FMCW (frequency modulated continuous wave)-radar level sensors. Radar signals emitted from radar obstacle detectors may have antennas. The radar obstacle detector may have horn antennas to direct the signals in a beam.

The present disclosure is directed, at least in part, to improving or overcoming one or more aspects of the prior art system.

### Brief Summary of the Invention

The present disclosure describes a radar obstacle detector for a railway crossing. The radar obstacle may comprise a waveguide; a transmitting element for emitting microwaves, the transmitting element being positioned in the waveguide; a horn coupled to the waveguide, the horn having a first aperture; a dielectric insert positioned in the horn; and a plurality of PCB stacks positioned at the first aperture, the PCB stacks being aligned to the plane of the first aperture, each PCB stack comprising a plurality of PCB substrates wherein each PCB substrate has a conductive strip positioned on a planar surface aligned to the plane of the first aperture.

### Brief Description of the Drawings

The foregoing and other features and advantages of the present disclosure will be more fully understood from the following description of various embodiments, when read together with the accompanying drawings, in which:
Fig. 1 is an exploded view of a radar obstacle detector according to the present disclosure;
Fig. 2 is a front view of a radar obstacle detector of Fig. 1;
Fig. 3 is a rear view of a radar obstacle detector of Fig. 1;
Fig. 4 is a close-up view of a plurality of PCB stacks in the radar obstacle detector of Fig. 1;
Fig. 5 is a view of a plurality of PCB substrates in a PCB stack of Fig. 3;
Fig. 6 is a side view of the radar obstacle detector of Fig. 1 including a schematic radar beam;
Fig. 7 illustrates a railway crossing with the radar obstacle detector of Fig. 1 having a scanning zone substantially diagonal across a surveillance zone; and
Fig. 8 is a graph illustrating the magnitude of gain and phase shift of radar signals emitted from the radar obstacle detector of Fig. 1.

### Detailed Description

This disclosure generally relates to a radar obstacle detector for detection of objects at a railway crossing. The radar obstacle detector may have an optimal distribution of a radar beam across the railway crossing.

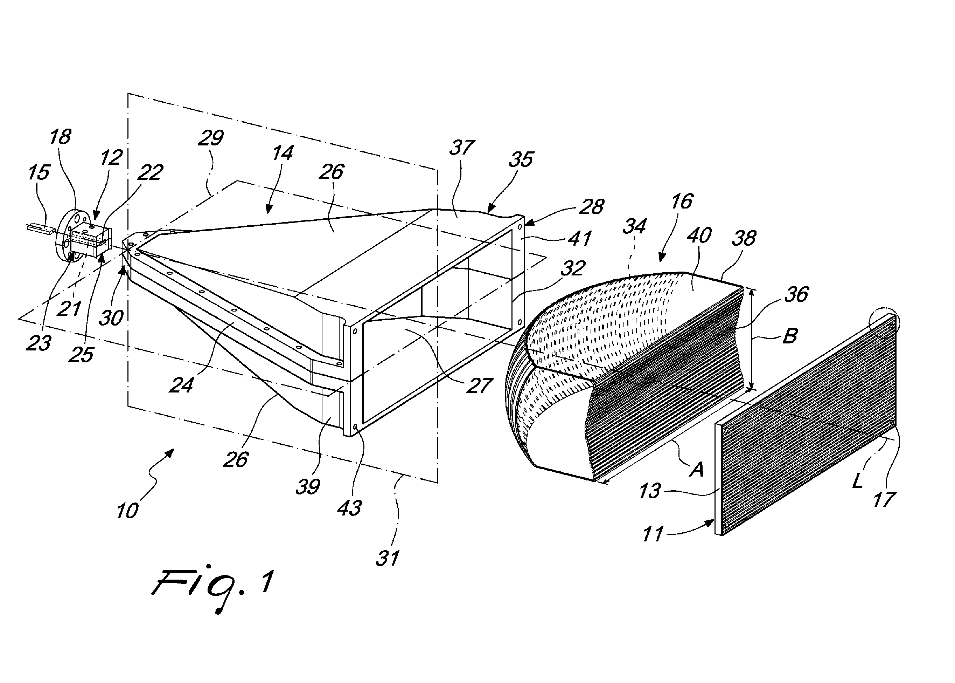

Fig. 1 illustrates a radar obstacle detector **10** comprising a waveguide **12,** a horn **14,** a dielectric insert **16** and a plurality of printed circuit board ("PCB") stacks **11.** The radar obstacle detector **10** further comprises a transmitting element **15.** The radar obstacle detector **10** may further comprise a flange **18.** The plurality of PCB stacks **11** may be disposed on the horn **14.** Radar obstacle detector **10** may be a fixed antenna.

With reference to Figs. 1 to 3, the waveguide **12** may have a first opening **20** and a second opening **22.** Waveguide **12** may be hollow and may have a waveguide cavity **21** extending between the first opening **20** and the second opening **22.** Radio signals may propagate through the waveguide cavity **21.** The first opening **20** may be rectangular in cross section. The second opening **22** may be rectangular in cross section. The radio signals may exit from the waveguide **12** through the second opening **22.**

With reference to Fig. 1, the waveguide **12** may be substantially cuboid in shape. The waveguide **12** may a have first guide end **23.** The first guide end **23** may have the first opening **20.** The waveguide **12** may have a second guide end **25** opposite the first guide end **23.** The second guide end **25** may have the second opening **22.** The axial length of the waveguide **12** may be longitudinally measured from the second guide end **25** defining the second opening **22** to the first guide end **23** defining the first opening **20.**

The waveguide **12** may be made of an electrically conducting material. Waveguide **12** may be made of aluminum or a high-grade steel, or of a plastic coated with a conductive material. In an embodiment, the waveguide **12** may have a standard of WR12.

With reference to Fig. 1, horn **14** may be funnel shaped and may extend along a longitudinal axis **L.** Horn **14** may be a pyramidal horn. Horn **14** may be hollow and may have a horn cavity **27.** Radio signals may propagate through the horn cavity **27.** Horn cavity **27** may extend from a first horn end **28** to a second horn end **30.** Horn **14** may have first flared sides **24** and second flared sides **26.** The first flared sides **24** and second flared sides **26** may delimit the horn cavity **27.**

The first flared sides **24** may increase in mutual distance along the longitudinal axis **L.** The first flared sides **24** may increase in mutual distance from the second horn end **30** to the first horn end **28.** The second flared sides **26** may increase in mutual distance along the longitudinal axis **L.** The second flared sides **26** may increase in mutual distance from the second horn end **30** to the first horn end **28.**

A first plane **29** may intersect the first flared sides **24.** The first flared sides **24** may lie on the first plane **29.** The first flared sides **24** may lie on the first plane **29** that is parallel to the longitudinal axis **L** of the horn **14.** The longitudinal axis **L** of the horn **14** may intersect the first plane **29.** First flared sides **24** may increase in mutual distance along the first plane **29.**

A second plane **31** may intersect the second flared sides **26.** The second flared sides **26** may lie on the second plane **31** that is parallel to the longitudinal axis **L** of the horn **14.** The longitudinal axis **L** of the horn **14** may intersect the second plane **31.** Second flared sides **26** may increase in mutual distance along the second plane **30.** The first plane **29** may be orthogonal to the second plane **31.**

At the first horn end **28** the horn **14** may have a jacket portion **35.** The jacket portion **35** may have a pair of parallel sides **37, 39.** Parallel sides **37** may be parallel to the first plane **29** and parallel sides **39** may be parallel to the second plane **31.**

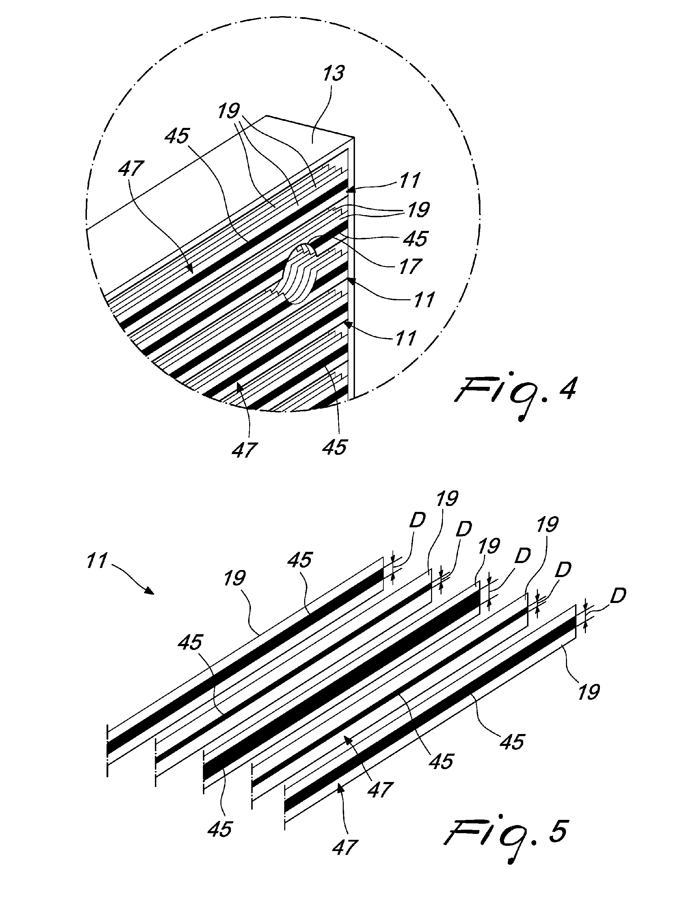

The first horn end **28** may have a first aperture **32.** Radio signals may be emitted as a radar beam from the horn **14** through the first aperture **32.** With reference to Fig. 4, the second horn end **30** may have a second aperture **33.** Radio signals may travel into the sectoral horn **14** through the second aperture **33.** Radio signals may propagate through the horn cavity **27** from second aperture **33** to the first aperture **32.**

With reference to Fig. 1, the first aperture **32** may have a rectangular cross section. The first aperture **32** may be extended along the first horn end **28.** In an embodiment, the first aperture **32** may be extended in a direction along the first plane **29.** First aperture **32** may lie on a plane that is substantially perpendicular to the longitudinal axis **L** of the horn **14.** First aperture **32** may lie on a plane that is substantially perpendicular to the first plane **29** and the second plane **31.**

Horn **14** may be connected at the second horn end **30** to the second guide end **25** of the waveguide **12.** The second aperture **33** may have dimensions that correspond to the dimensions of the second opening **22** of the waveguide **12.** Radio signals may travel from the waveguide cavity **21** through the second opening **22** and the second aperture **33** into the horn cavity **27.**

In an embodiment, the horn **14** and the waveguide **12** may be formed separately and subsequently connected. In an alternative embodiment, the horn **14** and the waveguide **12** may be formed as a monolithic structure.

The axial length of the waveguide **12** may be measured longitudinally from the first horn end **28** defining the first aperture **32** to the second horn end **30** defining the second aperture **33.** The horn **14** may be made of an electrically conducting material. Horn **14** may be made of aluminum or a high-grade steel, or of a plastic coated with a conductive material. In an embodiment, the horn **14** may be made of aluminum having a film coating of silver.

Transmitting element **15** may be connected to an electronic unit that generates radio signals. Transmitting element **15** may couple the radio signals into the waveguide **12.** The transmitting element **15** may emit the radio signals in the form of microwaves through the waveguide **12.** In an embodiment, the radio signals may be in the form of continuous microwaves. The radio signals may be in the form of frequency modulated continuous microwaves.

The transmitting element **15** may be positioned in the waveguide **12.** The transmitting element **15** may be positioned in the cavity **21.** The transmitting element **15** may be positioned through the first opening **20.** In an embodiment, the transmitter element **15** may transmit a radio signal with a frequency of 76GHz.

The radar obstacle detector **10** may further comprise a receiver element (not shown) to receive reflected microwaves. The receiver element may be positioned in the waveguide **12.** The receiver element may be positioned through the first opening **20.** In an embodiment, the transmitting element **15** and the receiver element may be provided in a single module.

The dielectric insert **16** may have an arcuate edge **34** and a radiating edge **36.** A series of notches may be provided on the arcuate edge **34.** The notches may be substantially transverse to the direction of extension of the arcuate edge **34.** The notches may extend in a direction substantially parallel to the second plane **31.** In an embodiment, arcuate edge **34** may be serrated. A series of teeth may extend from the arcuate edge **34.** In an alternative embodiment, the arcuate edge **34** may be a parabolic curve. In a further alternative embodiment, the arcuate edge **34** may be smooth.

A series of longitudinal notches may be provided on the radiating edge **36.** The notches may be parallel to the direction of extension of the radiating edge **36.** The notches may extend in a direction substantially orthogonal to the notches on arcuate edge **34.** The notches may be arranged in a direction substantially parallel to the first plane **29.** In an embodiment, the radiating edge **36** may be serrated. A series of teeth may extend from the radiating edge **36.** In an alternative embodiment, the radiating edge **36** may be a synclined. In a further alternative embodiment, the radiating edge **36** may be concave. In yet a further alternative embodiment, the radiating edge **36** may be smooth.

The dielectric insert **16** may be made of material having a dielectric constant of 2 F/M. The dielectric insert **16** may be made of polytetrafluoroethylene.

The arcuate edge **34** and the radiating edge **36** may be connected by transverse edges **38.** Transverse edges **38** may be parallel. Transverse edges **38** may be substantially orthogonal to the radiating edge **36.** Dielectric insert **16** may have sides **40.** Sides **40** may be parallel. Each side **40** may be bordered by the arcuate edge **34,** the radiating edge **36** and the transverse edges **38.**

Dielectric insert **16** may have a length **A.** Dielectric insert **16** may have a length **A** of xxx mm. Dielectric insert **16** may have a height **B.**

The dielectric insert **16** may be positioned in the horn **14.** The dielectric insert **16** may be inserted into the first aperture **32** of the horn **14.** Dielectric insert **16** may fully fit into the first aperture **32.** The dielectric insert **16** may be enclosed by walls of the aperture **32.** Transverse edges **38** and sides **40** may contact inner walls of the horn **14.** Dielectric insert **16** may be accommodated in the jacket portion **35.** Transverse edges **38** and sides **40** may contact inner walls of the jacket portion **35.** Transverse edges **38** may contact inner walls of the parallel sides **39.** Sides **40** may contact inner walls of the parallel sides **37.**

The arcuate edge **34** and the radiating edge **36** may not contact the inner walls of the horn **14.** The arcuate edge **34** may face the waveguide **12.** The radio signal propagating through the horn cavity **27** may be received at the arcuate edge **34.** The radiating edge **36** may face away from the waveguide **12.**

The radio signal may radiate from the radiating edge **36.** The radio signal may radiate from the radiating edge **36** as a radar beam having respective beam angles relative to the first flared sides **24** and the second flared sides **26** of the horn **14.**

At the first horn end **28,** first aperture **32** may be bound by a mounting surface **41.** Holes **43** may be provided on the mounting surface **41.** In an embodiment, holes **43** may be provided adjacent the vertices of the mounting surface **41.**

With reference to Fig. 1, the plurality of PCB stacks **11** may be positioned at the first aperture **32.** The PCB stacks **11** may be positioned across the first aperture **32.** PCB stacks **11** may extend longitudinally across first aperture **32.** PCB stacks **11** may be orthogonal to the longitudinal axis **L** of the horn **14.** PCB stacks **11** may be parallel to the first plane **29.** PCB stacks **11** may be orthogonal to the second plane **31.**

The PCB stacks **11** may be distributed laterally across the first aperture **32.** PCB stacks **11** may be distributed at the first aperture **32** along a direction transverse to the longitudinal axis thereof. PCB stacks **11** may be distributed along a direction substantially orthogonal to the longitudinal axis **L.** PCB stacks **11** may be distributed along a direction substantially orthogonal to the first plane **29.** PCB stacks **11** may be distributed along a direction substantially parallel to the second plane **31.**

The plurality of the PCB stacks **11** may lie on a plane. PCB stacks **11** may be mutually aligned. PCB stacks **11** may be mutually arranged in a edgewise manner. The PCB stacks **11** may be aligned to the plane of the first aperture **32.** PCB stacks **11** may be parallel to the plane of the first aperture **32.**

With reference to Fig. 4, PCB stacks **11** may be mounted to a mounting bracket **13.** The mounting bracket **13** with the PCB stacks **11** may be configured for mounting to the horn **14.** The mounting bracket **13** with the PCB stacks **11** may be configured for mounting to the mounting surface **41.** In an embodiment, mounting holes **17** may be provided in the PCB stacks **11** for mounting to the holes **43** on the mounting surface **41.** The mounting holes **17** may have a diameter of 2.1mm. In an alternative embodiment, the mounting holes **17** may be provided in the mounting bracket **13** for mounting to the mounting surface **41.**

In an embodiment, the plurality of PCB stacks **11** may be mounted to the horn **14.** Each PCB stack **11** may be independently mounted to the horn **14.** The PCB stacks **11** may be mounted to the mounting surface **41.** In an alternative embodiment, PCB stacks **11** may be mounted to the inner walls of the jacket portion **35** of the horn **14.** PCB stacks **11** may be mounted to the inner walls of the parallel sides **39.**

Each PCB stack **11** may comprise a plurality of PCB substrates **19.** Each PCB substrate **19** may have a planar surface **47.** The planar surface **47** may be aligned to the plane of the first aperture **32.** The planar surface **47** may be parallel to the plane of the first aperture **32.** In an embodiment, each PCB stack **11** may comprises between 3 to 6 PCB substrates **19.** In an alternative embodiment, each PCB stack **11** may comprise at least 5 PCB substrates **19.**

Each PCB substrate **19** may be positioned across the first aperture **32.** PCB substrate **19** may extend longitudinally across first aperture **32.** PCB substrate **19** may extend orthogonal to the longitudinal axis **L** of the horn **14.** PCB substrate **19** may extend parallel to the first plane **29.** PCB substrate **19** may extend orthogonal to the second plane **31.** PCB substrate **19** may extend parallel to the mounting surface **41.**

Each planar surface **47** may be positioned across the first aperture **32.** Planar surface **47** may extend longitudinally across first aperture **32.** Planar surface **47** may extend orthogonal to the longitudinal axis **L** of the horn **14.** Planar surface **47** may extend parallel to the first plane **29.** Planar surface **47** may extend orthogonal to the second plane **31.** Planar surface **47** may extend parallel to the mounting surface **41.**

In each PCB stack **11,** the plurality of PCB substrates **19** may be distributed along a direction transverse to the longitudinal axis thereof. PCB substrates **19** may be distributed along a direction substantially parallel to the longitudinal axis **L.** PCB substrates **19** may be distributed along a direction substantially parallel to the first plane **29.** PCB substrates **19** may be distributed along a direction substantially orthogonal to the second plane **31.** PCB substrates **19** may be mutually spaced. The PCB substrates **19** may be mutually spaced by a distance of 0.889 mm.

In each PCB stack **11,** the plurality of the PCB substrates **19** may lie on a plane. The plurality of the PCB substrates **19** may lie edgewise on the plane. PCB substrates **19** may be mutually aligned. PCB substrates **19** may be mutually parallel. PCB substrates **19** may be arranged in a file along a direction parallel to the longitudinal axis **L.** PCB substrates **19** may be arranged in a file along a direction substantially orthogonal to the plane of the first aperture **32.**

In each PCB stack **11,** the planar surfaces **47** may be mutually aligned. Planar surfaces **47** may be mutually parallel. Planar surfaces **47** may be arranged in a file along a direction parallel to the longitudinal axis **L.** Planar surfaces **47** may be arranged in a file along a direction substantially orthogonal to the plane of the first aperture **32.**

Respective PCB substrates **19** in the plurality of PCB stacks **11** may be mutually aligned. Respective PCB substrates **19** in the plurality of PCB stacks **11** may be mutually aligned in a column. The plurality of PCB stacks **11** may comprise a plurality of columns of PCB substrates **19.** Each column of PCB substrates **19** may be substantially orthogonal to the longitudinal axis **L.** Each column of PCB substrates **19** may be substantially parallel to the plane of the first aperture **32.** Each column of PCB substrates **19** may be substantially perpendicular to the first plane **29** and the second plane **31.** Each column of PCB substrates **19** may lie on a plane.

Respective planar surfaces **47** in the plurality of PCB stacks **11** may be mutually aligned. Respective planar surfaces **47** in the plurality of PCB stacks **11** may be mutually aligned in a column. The plurality of PCB stacks **11** may comprise a plurality of columns of planar surfaces **47.** Each column of planar surfaces **47** may be substantially orthogonal to the longitudinal axis **L.** Each column of planar surfaces **47** may be substantially parallel to the plane of the first aperture **32.** Each column of planar surfaces **47** may be substantially perpendicular to the first plane **29** and the second plane **31.** Each column of planar surfaces **47** may lie on a plane.

The PCB substrates **19** may be a high frequency laminate. PCB substrate **19** may be made of Polytetrafluoroethylene ("PTFE") laminates. In particular, the PCB substrate **19** may be made of glass microfiber reinforced PTFE composites. The PCB substrate **19** may have a dielectric constant of 2.2. The PCB substrate **19** may have a dielectric constant of 2.2 across the thickness thereof (Z direction). The PCB substrate **19** may have a dielectric constant of 2.2 in a direction substantially orthogonal to the plane of the first aperture **32.** In an embodiment, the PCB substrate may be a high frequency laminate (RT/duroid^{®} 5880) from the Rogers coporation. The planar surfaces **47** may have a width of 44mm and a length of 117mm.

Each PCB substrate **19** may have a conductive strip **45.** The conductive strip **45** may be positioned on each planar surface **47.** The conductive strip **45** may be positioned on each planar surface **47** facing externally. The conductive strip **45** may be positioned on each planar surface **47** facing externally of the horn **14.** The conductive strip **45** may be positioned on each planar surface **47** facing away from the waveguide **12.**

Each conductive strip **45** may be centrally positioned on each respective planar surface **47.** Each conductive strip **45** may extend longitudinally on each respective planar surface **47.** Each conductive strip **45** may extend across the entire length of the planar surface **47.** Each conductive strip **45** may extend across the first aperture **32.** The longitudinal axis of the planar surface **47** may intersect the conductive strip **45.** The longitudinal axis of the planar surface **47** may bisect the conductive strip **45.**

With reference to Fig. 5, in each PCB stack **11,** the conductive strips **45** may vary in width. The width **D** of the conductive strip **45** may be the distance transverse the longitudinal axis of the conductive strip **45.** The conductive strips **45** may have a width **D** ranging from 146 µm to 453 µm.

In an embodiment with 5 PCB substrates, the central conductive strip **45** may have the greatest width **D.** The central conductive strip **45** may have a width **D** of 453µm. The outermost conductive strips **45** may have the same width **D.** The outermost conductive strips **45** may have a width **D** of 219µm. The conductive strips **45** interposed between the outermost and central conductive strips **45** may have the same width **D.** The interposed conductive strips **45** may have the smallest width **D.** The interposed conductive strips **45** may have a width **D** of 146µm.

In each PCB stack **11,** the conductive strips **45** may be mutually aligned. Conductive strips **45** may be mutually parallel. Conductive strips **45** may be arranged in a file along a direction parallel to the longitudinal axis **L.** Conductive strips **45** may be arranged in a file along a direction substantially orthogonal to the plane of the first aperture **32.**

Respective conductive strips **45** in the plurality of PCB stacks **11** may be mutually aligned. Respective conductive strips **45** in the plurality of PCB stacks **11** may be mutually aligned in a column. The plurality of PCB stacks **11** may comprise a plurality of columns of conductive strips **45.** Each column of conductive strips **45** may be substantially orthogonal to the longitudinal axis **L.** Each column of conductive strips **45** may be substantially parallel to the plane of the first aperture **32.** Each column of conductive strips **45** may be substantially perpendicular to the first plane **29** and the second plane **31.** Each column of conductive strips **45** may lie on a plane.

The conductive strip **45** may be formed of a layer of copper or multiple layers of copper and gold. The thickness of copper may be 17µm. The thickness for gold may be 2 µm.

The radio signal radiating from the radiating edge **36** of the dielectric insert **16** may be received at the plurality of the PCB stacks **11.** The radio signal may be received by the first PCB substrate **19** of the plurality of PCB substrates **19.** The radio signal may penetrate through the plurality of PCB substrates **19** and the respective conductive strips **45.** The radio signal may radiate from last PCB substrate **19** of the plurality of PCB substrates **19** as a radar beam. The radar beam may have respective beam angles relative to the first flared sides **24** and/ or the second flared sides **26** of the horn **14.**

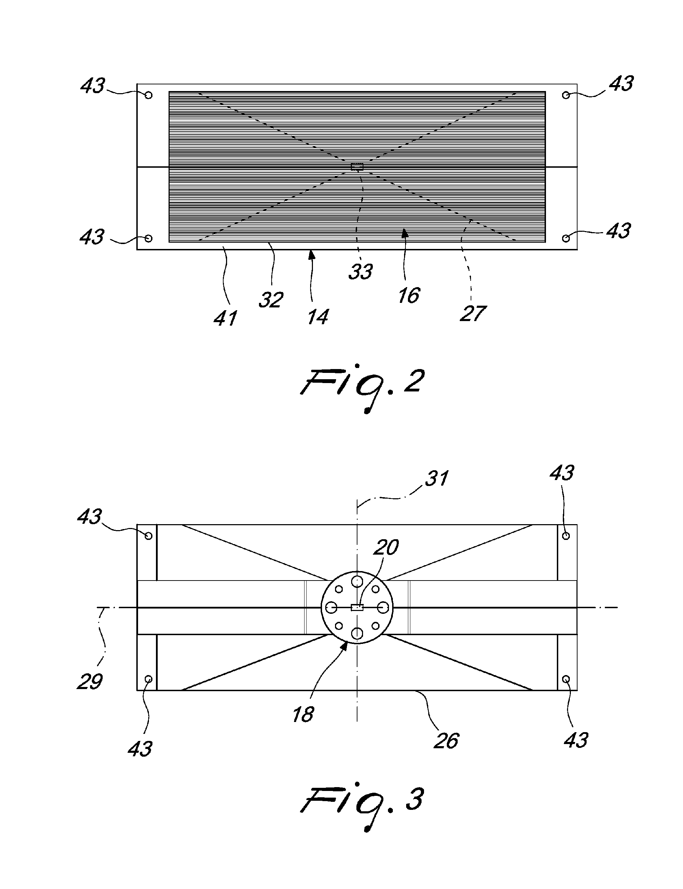

With reference to Fig. 3, the flange **18** may be a mounting for the radar obstacle detector **10.** The flange **18** may be mounted by bolts (not shown). The flange **18** may be mounted to a support such as a upright pole. Flange **18** may be metallic. Flange **18** may be provided with a plurality of bores **42.** The bores **42** may serve to receive screws through which the radar obstacle detector **10** may be attached to the support. The bores **42** may correspond to bores provided in the support. The flange **18** may be positioned on the waveguide **12.** Flange **18** may be formed monolithically with the waveguide **12.**

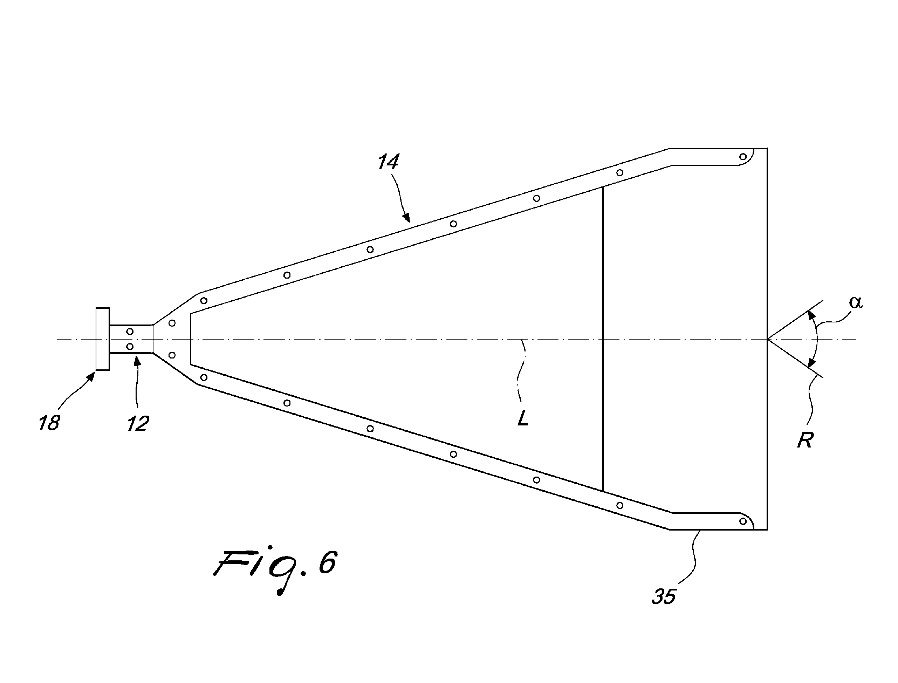

Fig. 6 illustrates a side view of the radar obstacle detector **10** from which a radar beam **R** is emitted. The radar beam **R** may have a beam angle **α.** The beam angle **α** may determine the beam height of the radar beam **R.** The beam angle α may determine the vertical coverage of the scanning beam over a vertical plane.

The beam angle **α** may be narrow. The beam angle **α** may be between 6 to 0 degrees relative to the first flared sides **24.** Preferably, the beam angle **α** may be between 5 to 2 degrees relative to the first flared sides **24.** More preferably, the beam angle **α** may be 3 degrees relative to the first flared sides **24.**

The radar beam **R** may have a beam angle **α** between 6 to 0 degrees along the first plane **29.** Preferably, the beam angle **α** may be between 5 to 2 degrees along the first plane **29.** More preferably, the beam angle **α** may be 3 degrees along the first plane **29.**

The beam angle may determine the altitude coverage of the radar beam over a vertical plane. Reduction in the beam angle may increase the antenna gain of the radar obstacle detector **10.** The reduced beam angle may improve the directivity of the radar obstacle detector **10** for a given radiation efficiency.

The narrow beam angle may be further defined as a beam angle with a divergent angle between 3 to 0 degrees from the longitudinal axis **L.** Preferably, the beam angle may be between 2.5 to 1 degrees from the longitudinal axis **L.** More preferably, the beam angle may be 1 degree from the longitudinal axis **L.**

The radar obstacle detector **10** may have a scanning range. The scanning range may be the distance from the radar obstacle detector **10** within which an object may be detected. The scanning range of the radar obstacle detector **10** may extend across an observation area.

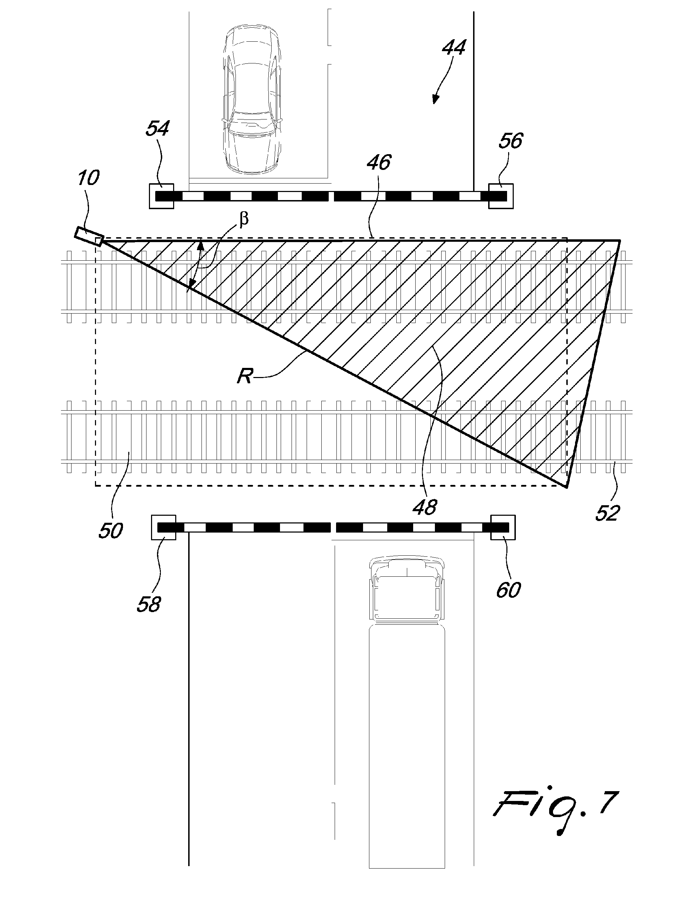

Fig. 7 illustrates a plan view of the radar obstacle detector **10** located at a railway crossing **44.** The railway crossing **44** may be positioned at an exit to a tunnel or at an entrance to a tunnel. The railway crossing **44** may have tracks **50, 52.** Barriers **54, 56, 58, 60** may secure the railway crossing **44** from entry of vehicles from crossing the rail tracks **50, 52** prior to the passage of a train. Barriers **54, 56, 58, 60** may be lowered prior to arrival of the train and raised after the departure of the train. Barriers **54, 56, 58, 60** may be controlled by a barrier control system that may communicate with the radar obstacle detector **10.**

The radar obstacle detector **10** may detect objects at the railway crossing **44.** The radar obstacle detector **10** may be positioned at the railway crossing **44** to detect objects in surveillance area **46.** Radar obstacle detector **10** may be positioned at a height of approximately 1 meter. Radar obstacle detector **10** may be positioned at a height of approximately 1 meter from the rail tracks **50, 52.**

The radar beam **R** may have an aperture angle. The beam aperture angle **β** may determine the beam width of the radar beam **R.** The beam aperture angle **β** may determine the horizontal coverage of the scanning beam over a horizontal plane.

Beam aperture angle **β** may be narrow. The radar beam **R** may have a beam aperture angle **β** may be between 25 to 35 degrees along the second plane **31.** Preferably, the beam aperture angle **β** may be between 27 to 32 degrees along to the second plane **31.** More preferably, the beam aperture angle **β** may be 30 degrees along the second plane **31.**

Radar obstacle detector **10** may have a scanning zone **48.** The scanning zone **48** may be determined by the scanning range, the beam aperture angle **β** and the beam angle **α** of the radar obstacle detector **10.** The scanning zone **48** may extend across a surveillance area **46.** The radar obstacle detector **10** may be suitably positioned so that the scanning zone **48** may provide adequate coverage of the surveillance area **46.** The radar obstacle detector **10** may be suitably orientated so that the scanning zone **48** may provide adequate coverage of the surveillance area **46.** In an embodiment, a plurality of radar obstacle detectors **10** may be position at the surveillance area **46.**

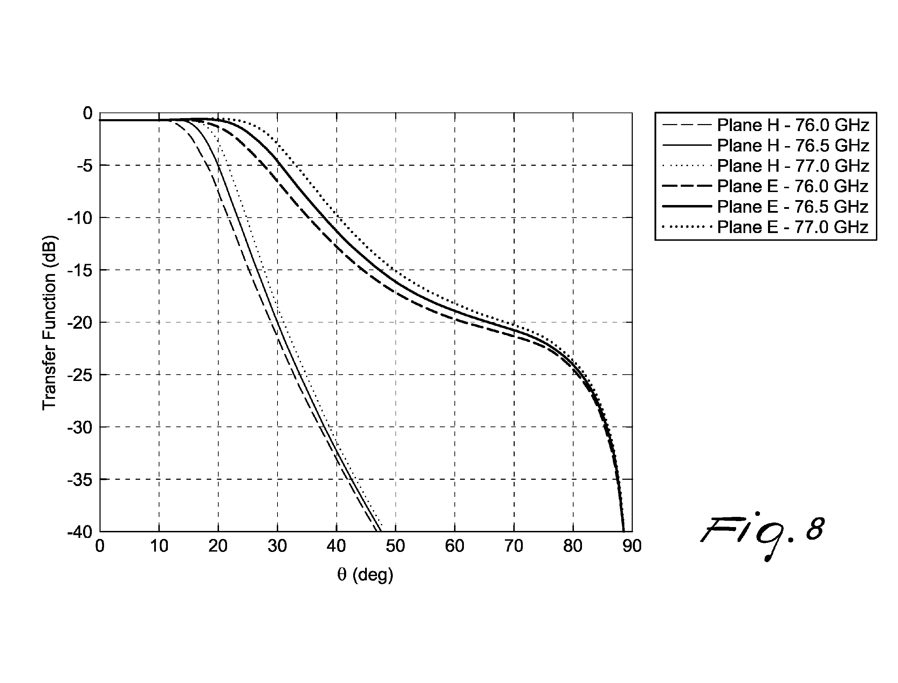

Fig. 8 is a graph illustrating an exemplary relationship between magnitude of gain and phase shift for given frequencies of radar signals being emitted from the radar obstacle detector **10.** The electric field and magnetic field for the signal at each frequency is illustrated.

The skilled person would appreciate that foregoing embodiments may be modified or combined to obtain the radar obstacle detector **10** of the present disclosure.

### Industrial Applicability

This disclosure describes a radar obstacle detector **10** for scanning a crossing area at a railway crossing. The radar obstacle detector **10** may detect the presence of an object on the tracks. The radar obstacle detector **10** may detect the presence of an object at the vicinity of the tracks. Upon detection of an object, a detection system comprising the radar obstacle detector **10** may signal the approaching train to stop. The system may signal the approaching train to stop if the surveillance zone is occupied by an object of a minimum specified size.

The radar obstacle detector **10** may have a narrow beam in the plane of the second flared sides **26** of the horn **14.** The radar obstacle detector **10** may have a narrow beam in the plane of the first flared sides **24** of the horn **14.**

The narrow beam may avoid directing the radar beam at the ground so as to prevent false detections. The narrow beam may also avoid directing the radar beam at a level high above the ground so as to prevent unnecessary beam transmissions. The radar beam may emit the narrow beam while having a practical length of a standard horn.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A radar obstacle detector (10) for a railway crossing, the radar obstacle detector (10) comprising:
a waveguide (12);
a transmitting element (15) for emitting microwaves, the transmitting element (15) being positioned in the waveguide (12);
a horn (14) coupled to the waveguide (12), the horn (14) having a first aperture (32);
a dielectric insert (16) positioned in the horn (14); and
a plurality of PCB stacks (11) positioned at the first aperture (32), the PCB stacks (11) being aligned to the plane of the first aperture (32), each PCB stack (11) comprising a plurality of PCB substrates (19) wherein each PCB substrate (19) has a conductive strip (45) positioned on a planar surface (47) aligned to the plane of the first aperture (32).

2. The radar obstacle detector (10) of claim 1 wherein the PCB stacks (11) and the planar surface (47) of each PCB substrate (19) are parallel to the plane of the first aperture (32).

3. The radar obstacle detector (10) of claims 1 or 2 wherein the PCB substrates (19) are mutually spaced by a distance of 0.889 mm.

4. The radar obstacle detector (10) of any one of preceding claims wherein the PCB substrate (19) is made of a PTFE laminate having a dielectric constant of 2.2.

5. The radar obstacle detector (10) of any one of preceding claims wherein the conductive strips (45) are centrally positioned and extend longitudinally along the planar surface (47).

6. The radar obstacle detector (10) of any one of preceding claims wherein the conductive strips (45) have a width ranging from 146 µm to 453 µm.

7. The radar obstacle detector (10) of claim 6 wherein each PCB stack (11) comprises at least 5 PCB substrates (19).

8. The radar obstacle detector (10) of claim 7 wherein the central conductive strip (45) has a width (D) of 453µm.

9. The radar obstacle detector (10) of claim 7 or 8 wherein the outermost conductive strips (45) have a width (D) of 219µm.

10. The radar obstacle detector (10) of claim 7, 8 or 9 wherein interposed conductive strips (45) have a width (D) of 146µm.

11. The radar obstacle detector (10) of any one of preceding claims wherein the plurality of PCB stacks (11) are mounted on a mounting bracket (13) for mounting to the horn (14).

12. The radar obstacle detector (10) of any one of preceding claims 1 to 7 wherein the plurality of PCB stacks (11) are mounted to the horn (14).

13. The radar obstacle detector (10) of any one of preceding claims wherein the PCB stacks (11) extend longitudinally across first aperture (32) and are distributed laterally across the first aperture (32).

14. The radar obstacle detector (10) of claims 1 to 3 wherein radar beam (R) has a beam aperture angle (β) of 25 to 35 degrees in a plane orthogonal to the plane of the first flared sides (24).
